# FASCICULE DE BREVET EUROPEEN

(11) **EP 1 215 983 B1**
(45) Date de publication et mention de la délivrance du brevet: **02.07.2003**
(21) Numéro de dépôt: 00964370.1
(22) Date de dépôt: 26.09.2000
(51) Int. Cl.: A47J 37/08

(54) **GRILLE-PAIN AVEC DISPOSITIF DE RECHAUFFAGE DE PETITS PAINS OU ALIMENTS ANALOGUES**
TOASTGERÄT MIT EINER ERHITZUNGSVORRICHTUNG FÜR BRÖTCHEN ODER GLEICHARTIGE NAHRUNGSMITTEL
TOASTER WITH DEVICE FOR HEATING ROLLS OR SIMILAR FOODS

(30) Priorité: 27.09.1999 FR 9912257
(43) Date de publication de la demande: 26.06.2002
(73) Titulaire: SEB S.A., 69130 Ecully (FR)
(72) Inventeur: MAUFFREY, Guy, F-70280 Breuchotte (FR); LOUKACHINE, Claude, F-88200 Remiremont (FR)
(74) Mandataire: Kiehl, Hubert
(86) Numéro de dépôt international: FR0002654
(87) Numéro de publication internationale: WO01022856

(56) Documents cités:
- EP-A- 0 283 641
- DE-A- 2 749 919
- DE-U- 7 519 167
- DE-U- 9 314 717
- DE-U- 9 316 913

## Description

La présente invention se rapporte au domaine technique des appareils électroménagers de cuisson du type grille-pain et concerne plus particulièrement un dispositif de réchauffage de petits pains ou viennoiseries intégré audit grille-pain.

Dans ce domaine, la fonction de réchauffage est réalisée soit à l'aide d'un accessoire additionnel amovible venant se positionner sur le dessus du grille-pain, soit à l'aide d'un accessoire intégré au grille-pain, escamotable lorsqu'il n'est pas utilisé.

Ainsi, il est connu, notamment par le document DE-U-93 16 913.2, un grille-pain comprenant un moyen de réchauffage composé de deux fils métalliques rigides dépliables en rotation autour d'un axe de telle sorte à former un support situé à distance au-dessus du grille-pain. Les pains et viennoiseries posés sur ce support bénéficient alors de la convection naturelle ascendante de l'air chaud sortant du grille-pain. Cependant un tel système entraîne des temps de réchauffage assez longs, du fait de l'éloignement des fils du grille-pain, tout en ne garantissant pas un réchauffage homogène, la majeure partie du flux étant localisée au niveau de l'ouverture au-dessus de la chambre de chauffe. Par ailleurs, le mécanisme de rotation des fils peut se détériorer ou s'affaisser sous le poids de l'aliment à réchauffer. De plus, un tel dispositif est un élément ajouté au grille-pain, nécessitant des pièces additionnelles, notamment pour la rotation des fils, ce qui augmente le prix de revient dudit grille-pain.

Le brevet DE-U-91 15 161.9 décrit un grille-pain possédant un moyen de réchauffage amovible composé d'un réceptacle où le pain repose sur une grille. Sous celle-ci, est disposé un diffuseur perforé qui canalise l'air de part et d'autre du pain mis à réchauffer. Le rayonnement de la chaleur est guidé et réfléchi sur les parois latérales du pain. Ce dispositif permet, certes, de réchauffer plus efficacement le pain que les dispositifs à fils, par une meilleure répartition de la chaleur provenant du grille-pain, mais il constitue un accessoire encombrant et complexe au grille-pain et, de ce fait, augmente de façon notable le prix du grille-pain. Par ailleurs, dans une utilisation du grille-pain en grillage de tranches de pain, cet accessoire doit être enlevé et devient encombrant, et risque d'être perdu.

Un grille-pain selon le preambule de la revendication indépendante 1 est décrit dans le document DE-A-2 749 919.

Le but de la présente invention est de remédier aux problèmes présentés par l'art antérieur en proposant un grille-pain comportant un bâti agencé dans un boîtier, au moins une chambre de grillage verticale ouverte dans la partie supérieure du boîtier, un toit périphérique à l'ouverture de la chambre de grillage et solidaire du grille-pain, possédant un rebord supérieur muni d'ouvertures, des moyens de chauffe situés à proximité de la chambre de grillage, caractérisé en ce qu'au moins une partie du rebord du toit est surélevée par rapport à la partie supérieure du boîtier.

Ainsi, le grille-pain garde sa forme générale compacte tout en permettant d'offrir la possibilité de réchauffer de petits pains, disposés sur le rebord du toit sans avoir d'éléments amovibles ou basculant, tout en évitant de faire reposer le pain directement sur le boîtier généralement en plastique, évitant ainsi de le détériorer.

Ce toit peut être une tôle d'acier ou de matériau métallique, mais peut également être réalisé en d'autres matériaux non métalliques, comme les matières plastiques thermorésistantes, c'est à dire présentant des propriétés thermomécaniques adaptées au type de cuisson mis en oeuvre dans l'appareil, permettant de réduire les coûts. Des matériaux de type terre cuite ou céramique, éventuellement recouverts d'une couche d'émail sur la face destinée à être en contact avec les aliments peuvent aussi être utilisés, permettant, par leur inertie thermique, de conserver les aliments au chaud. D'autres matériaux, tels le verre, pouvant être facilement nettoyé, sont également inclus dans le champ de la présente invention.

Selon une variante de réalisation de l'invention, le rebord du toit possède des bossages, de telle sorte à présenter des points d'appui à différentes hauteurs. Ces bossages permettent, soit de surélever au moins une partie du rebord du toit par rapport à la partie supérieure du boîtier, soit, lorsque le rebord est entièrement surélevé par rapport au boîtier, de délimiter des zones en creux pour un positionnement du pain plus facile. Par ailleurs, ces bossages peuvent être prévus pour ménager des passages d'air chaud sous le pain qui est ainsi réchauffé de manière plus homogène.

Avantageusement, les ouvertures dans le rebord du toit sont localisées au niveau des zones de positionnement du pain. L'air chaud ascendant peut ainsi s'échapper dans les parties creuses résultant du bossage, ce qui favorise une meilleure répartition de la chaleur dans les zones prévues pour accueillir le pain.

En variante et/ou en complément de la précédente réalisation, le rebord du toit présente une déclivité vers l'ouverture de la chambre de chauffe, permettant, d'une part de mieux asseoir les viennoiseries au dessus de l'ouverture du grille-pain, et d'autre part d'éviter que le pain ne soit en contact direct avec les ouvertures du toit.

Avantageusement, un espace périphérique est ménagé entre le toit et le boîtier afin d'isoler ledit boîtier du toit, autorisant alors l'utilisation de matériaux plastiques de faibles caractéristiques techniques donc peu chers.

Avantageusement, le toit est solidaire du bâti du grille-pain, facilitant ainsi la réalisation de l'espace périphérique séparant le rebord du boîtier. Par extension, le toit et son rebord sont en tôle et proviennent d'une extension du bâti du grille-pain, permettant une économie de pièces et de temps de montage.

Selon une variante de réalisation, le toit est relié au boîtier par l'intermédiaire d'entretoises isolantes.

Avantageusement, la chambre de grillage est délimitée par deux grilles de serrage sensiblement verticales et susceptibles de se rapprocher l'une vers l'autre lorsque les éléments chauffants sont alimentés, lesdites grilles de serrage comportant un rebord supérieur sensiblement perpendiculaire aux dites grilles et orienté vers l'extérieur de la chambre, de manière à fermer partiellement la chambre de chauffe, lorsqu'elles sont rapprochées l'une de l'autre, pour ainsi détourner le flux d'air chaud ascendant généré par les éléments chauffants.

Cette configuration permet de répartir volontairement le flux de chaleur généré par les éléments chauffants pour qu'il ne se concentre pas uniquement vers la partie centrale de la chambre, le rebord ainsi agencé agissant tel un déflecteur pour dévier le flux d'air chaud. Le flux de chaleur ascendant, partiellement dévié est ainsi réparti, ce qui favorise un réchauffage homogène du pain posé sur le toit.

Selon une variante avantageuse, le rebord du toit présente, à sa base, une collerette extérieure inclinée d'un angle α par rapport à l'horizontal au moins égal à 30°.

Cette collerette permet d'orienter le flux de chaleur provenant de la face arrière du réflecteur vers les zones de réchauffage, tout en protégeant thermiquement le boîtier.

Avantageusement, des réflecteurs sont associés aux éléments chauffants, lesdits réflecteurs présentant, vers leur extrémité supérieure, un étranglement par l'intermédiaire de deux pentes convergentes. Cet étranglement est favorable à une bonne conservation de la chaleur dans le grille-pain en mode grillage, tout en permettant une orientation du flux thermique latéralement, pour un réchauffage homogène du pain déposé sur le rebord du toit.

Selon un mode de réalisation de l'invention, le grille-pain est constitué de deux chambres de chauffe verticales, de deux éléments chauffants latéraux situés chacun entre une chambre de chauffe et le boîtier du grille-pain, ces deux éléments étant montés électriquement en série, ainsi que d'un élément chauffant central situé entre les deux chambres de chauffe, et monté en parallèle sur les deux éléments chauffants latéraux, un interrupteur permettant de déconnecter les deux éléments latéraux afin de n'alimenter que l'élément chauffant central lors de l'opération de réchauffage.

Cette particularité permet, notamment dans le cas de grille-pain de forte puissance, d'effectuer le réchauffage de petits pains disposés sur le rebord du toit émergeant du grille-pain, à une puissance relativement peu élevée et compatible avec l'effet de réchauffage recherché. Par ailleurs, en n'alimentant que l'élément chauffant central, les fuites vers les parois latérales du boîtier sont réduites.

La présente invention sera mieux comprise à l'aide de la description qui va suivre, en référence aux figures annexées, données à titre d'exemple non limitatif, parmi lesquelles :

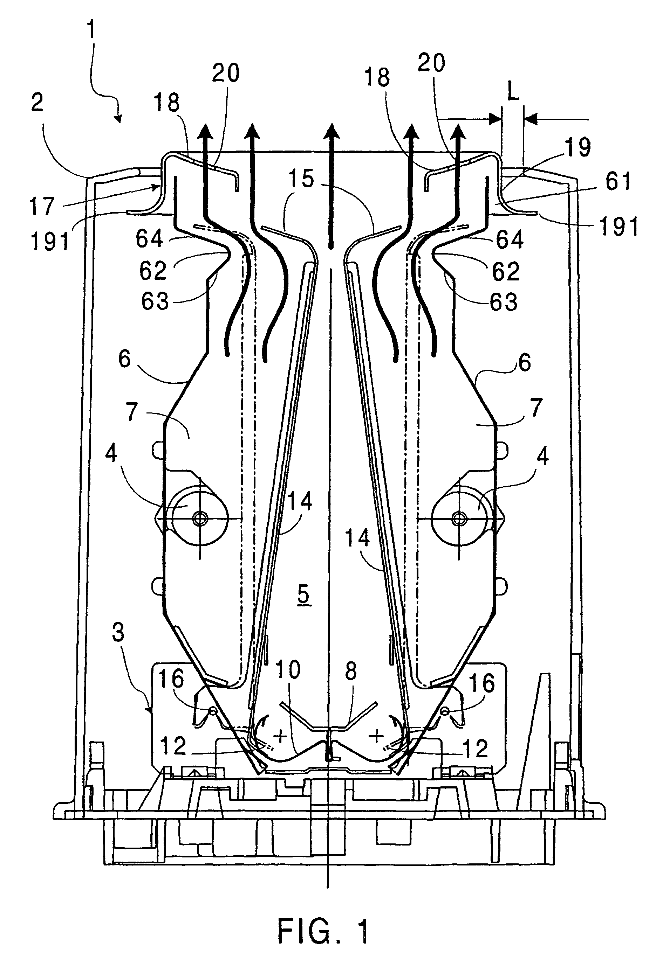

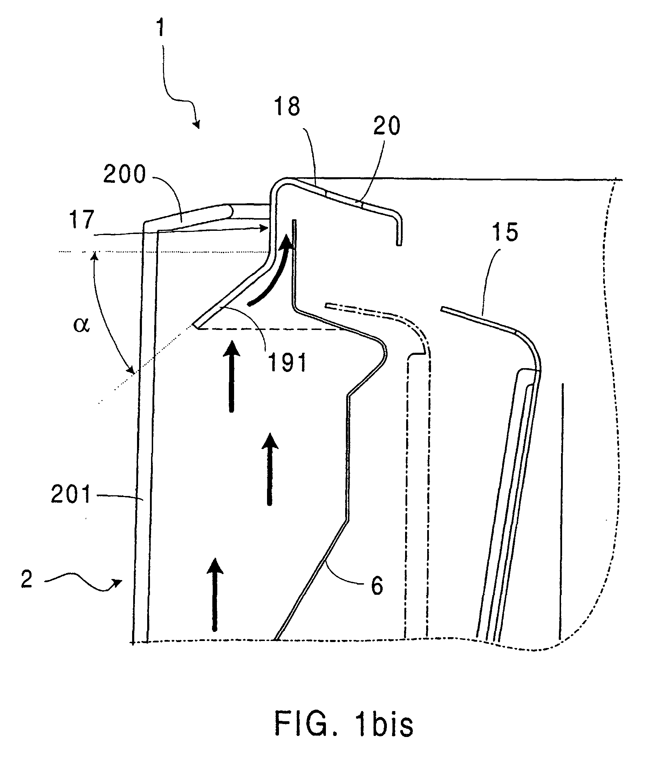

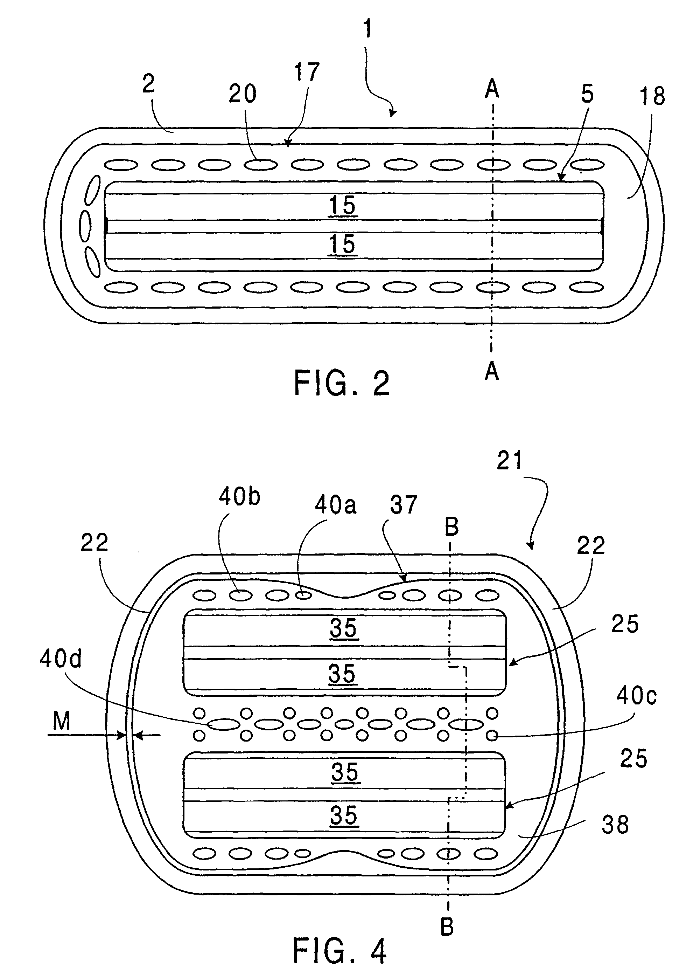

- la figure 1 est une vue en coupe transversale selon l'axe A-A de la figure 2 d'un grille-pain possédant une chambre de grillage, selon la présente invention,
- la figure 1bis est un détail de la partie supérieure du grille-pain, selon une variante de réalisation,
- la figure 2 est une vue de dessus partielle d'un grille-pain à une seule chambre de grillage selon la figure 1,
- la figure 3 est une vue en coupe transversale selon l'axe B-B de la figure 4 d'un grille-pain possédant deux chambres de grillage, équipé de la présente invention,
- la figure 4 est une vue de dessus partielle d'un grille-pain selon la figure 3,
- la figure 5 présente une variante de réalisation du dispositif de réchauffage conforme à l'invention.

Comme il est bien visible figure 1, le grille-pain 1 selon la présente invention comporte un boîtier 2 possédant une ouverture supérieure et à l'intérieur duquel est agencé un bâti 3 composé notamment de deux réflecteurs 6 longitudinaux ainsi que deux parois transversales 7 munies d'encoches dans lesquelles sont positionnés des éléments chauffants 4. Deux grilles 14 définissent une chambre de chauffe 5.

En ce qui concerne l'ouverture du boîtier, dans sa partie supérieure, est agencé un toit sous la forme d'une tôle 17 présentant un rebord 18, une paroi verticale 19 et, à sa base, une collerette 191.

Comme il est bien visible figure 1, la base, et, lorsqu'elle est présente, la collerette 191 du toit, ainsi qu'au moins une partie de la paroi verticale 19 du toit, sont localisées à l'intérieur du grille-pain, entourées de manière périphérique par le boîtier 2.

Le rebord 18 est orienté vers l'ouverture de la chambre de chauffe, d'une manière périphérique à celle-ci, comme il est bien visible figure 2. Le rebord 18 de la tôle 17 comporte des ouvertures 20 dont la forme, les dimensions et la répartition peuvent varier selon l'agencement des éléments chauffants, la puissance de chauffe,...

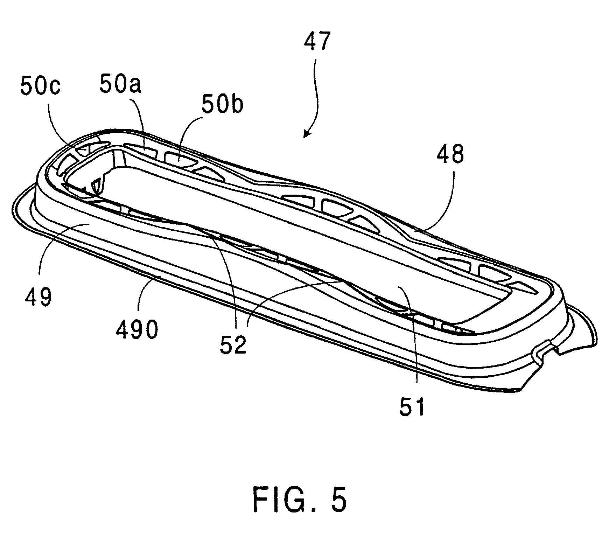

A titre d'exemple, les trous présentés ont une forme elliptique. Pour indiquer la fonction de réchauffage, ces trous peuvent également constituer des pictogrammes, par exemple en ayant une forme de croissants, afin de rappeler à l'utilisateur la présence de cette fonction sur le grille-pain, telle que représentée figure 5.

Avantageusement, le rebord 18 de cette tôle n'est pas plan et peut présenter des bossages situés entre les ouvertures, et/ou une déclivité selon la largeur du rebord. D'autres configurations peuvent être envisagées sans sortir du cadre de la présente invention, le principe étant de présenter des zones d'appui du pain surélevées par rapport au boîtier 2 et, avantageusement, par rapport aux ouvertures 20.

Dans un souci de simplification du montage du grille-pain et pour diminuer le nombre de pièces du grille-pain, la tôle 17 est solidaire du bâti 3. Selon une variante avantageuse, la tôle 17 est une extension du bâti 3.

Selon une autre forme de réalisation de l'invention, la tôle 17 est solidaire du boîtier du grille-pain, par l'intermédiaire d'entretoises isolantes, afin de diminuer le transfert de chaleur de la tôle vers le boîtier.

Selon l'exemple proposé, le boîtier est un boîtier plastique. Afin de ne pas détériorer ce matériau ou d'éviter l'utilisation d'un matériau trop technique tenant à haute température, un espace minimum L sépare la tôle du boîtier, excepté les liaisons par entretoises lorsque celles-ci existent. Cet espace n'est pas nécessaire si le boîtier peut supporter des températures élevées, mais dans un souci de sécurité pour l'utilisateur, il est important de limiter les déperditions thermiques vers les parois du boîtier afin de limiter leur température.

Deux grilles de serrage 14, définissant la chambre de chauffe, sont articulées autour d'un point 16 et possèdent une partie courbe 12 à leur extrémité située dans la partie basse du grille-pain, cette partie courbe 12 étant orientée vers l'intérieur de la chambre. Dans cette zone se trouve également une lame ressort 10 susceptible d'être déplacée par un chariot porte pain 8 lorsque ce dernier est amené dans la partie basse du grille-pain.

Les grilles de serrage 14, à leur extrémité opposée, c'est à dire dans le haut de la chambre de chauffe, sont courbées de telle sorte à présenter un rebord 15 sensiblement perpendiculaire au plan défini par les grilles, ce rebord étant orienté vers l'extérieur de la chambre.

Le fonctionnement d'un tel grille-pain, dans sa fonction de grillage, n'est pas modifié par la présente invention. Une tranche de pain est introduite dans la chambre de grillage 5, en appui sur le chariot porte-pain 8. Celui-ci est amené par l'utilisateur en une position basse par un bras s'étendant hors du boîtier du grille-pain ou par un processus automatique de descente du chariot porte-pain. Arrivé dans la partie basse du grille-pain, le chariot 8 actionne la lame ressort 10 dont les extrémités interagissent avec les parties courbes 12 des grilles 14 qui pivotent autour des points 16.

Sur la figure 1 est indiqué, en pointillés, le positionnement des grilles 14 lorsque le chariot est dans sa position de chargement/déchargement, alors que la représentation en trait plein correspond à la position des grilles lorsque le grille-pain est en fonctionnement, c'est à dire lorsque les éléments chauffants sont alimentés.

Les parties supérieures des grilles se rapprochent donc l'une de l'autre en serrant le pain. Le chariot porte pain est maintenu par des moyens connus de type mécanique ou électro-mécanique dans la partie basse du grille-pain pendant le temps de grillage programmé ou jusqu'au degré de grillage du pain désiré où les éléments chauffants cessent d'être alimentés électriquement. Un mécanisme permet alors de remonter le chariot porte pain vers une position de déchargement du pain. Les grilles retrouvent alors leur position d'origine. Ceci constitue un fonctionnement classique du grille-pain.

Le dispositif intégré de réchauffage des petits pains n'entrave pas le fonctionnement normal du grille-pain, la tôle 17 étant située en retrait de la chambre de grillage 5, les rebords 15 des grilles 14 étant orientés vers l'extérieur de la chambre. La seule modification conceme l'évacuation de la chaleur orientée sur les côtés latéraux du grille-pain.

Afin de limiter davantage l'élévation de la température du boîtier, il peut être prévu un recouvrement entre la paroi verticale 19 de la tôle 17 et une extension 61 du réflecteur 6, constituant ainsi une double paroi de protection du boîtier.

Dans son utilisation en réchauffeur de petits pains et aliments analogues, le principe reste similaire à celui d'une opération de grillage, mis à part la disposition du pain, localisé sur la tôle 17 et non sur le chariot porte pain. Par le même principe que précédemment expliqué, les grilles 14 se referment l'une vers l'autre sous l'action du déplacement du chariot porte pain 8. Sous l'effet de l'alimentation des éléments chauffants 4, de l'air chaud ascendant monte dans le grille-pain, par convection. La forme des réflecteurs 6, ainsi que celle des rebords 15 des grilles 14 permet de limiter le flux de chaleur central en freinant la convection et en orientant latéralement une partie dudit flux.

Comme bien illustré sur les figures 1 et 5, illustrant, respectivement à des échelles voisines de 1 et de ½, des formes avantageuses de l'invention, l'association d'une certaine largeur des rebords 15, d'une certaine fermeture des grilles, et de la valeur de l'ouverture de la chambre, matérialisée par le rebord 18 de la tôle 17, est calculée pour freiner l'échauffement de la valeur juste nécessaire pour éviter au pain de noircir. Les perforations dans le rebord de la tôle participent à cet effet en permettant à l'air chaud de s'échapper pour réchauffer les faces latérales du pain tout en évitant une surchauffe inutile dans la chambre de cuisson.

Par ailleurs, la partie supérieure des réflecteurs 6 est également étudiée pour, non seulement garder la chaleur à l'intérieur du grille-pain, mais également pour orienter celle-ci vers les ouvertures 20 du rebord 18 de la tôle 17 dans le mode réchauffage.

Ainsi, les réflecteurs présentent un étranglement 62 comportant, de part et d'autre, deux pentes orientées vers l'extérieur de la chambre, la première pente 63, du coté des éléments chauffants, permettant de rabattre la chaleur vers le centre du grille-pain, tandis que la deuxième, 64, située au-dessus de l'étranglement, orientant la chaleur vers les parties latérales du grille-pain, les parois 61 participant à la canalisation de la chaleur dans les ouvertures 20.

Il est à noter que la partie supérieure des réflecteurs, composée donc des parois 61 et des pentes 64, permet que d'éventuelles miettes provenant des pains mis à réchauffer soient dirigées dans la chambre de chauffe et donc éventuellement vers un tiroir ramasse-miettes lorsque le grille-pain en est pourvu, évitant de salir les zones situées entre la chambre de chauffe et le boîtier.

Le flux de chaleur principal est indiqué par des flèches en gras sur la figure 1. Il est ainsi visible que le flux de chaleur est réparti sur sensiblement la largeur de la zone d'appui du pain sur la tôle 17, ce qui favorise un réchauffage homogène du pain.

La limitation du flux de chaleur central par les rebords 15 des grilles 14 est bien visible figure 2 où sont représentés les rebords 15 laissant approximativement la même ouverture entre les deux grilles qu'entre une grille et le boîtier.

Selon une variante de réalisation présentée figure 1bis, la collerette 191 de la tôle 17 est inclinée vers le bas du grille-pain d'un angle α par rapport à l'horizontal. Par cette disposition, la chaleur montant dans le grille-pain à l'extérieur de la chambre de chauffe, émise par la face arrière du réflecteur 6, et matérialisée par les flèches, est en partie captée par la collerette, mais est également orientée vers les trous 20 en agissant tel un réflecteur. Ceci limite l'échauffement de la partie supérieure 200 du boîtier 2 du grille-pain, tout en améliorant la performance de réchauffage du pain.

Une bonne efficacité de cette configuration est obtenue pour un angle α au moins égal à 30°.

La manipulation est donc identique, que l'on soit dans une utilisation en tant que grillage ou en tant que réchauffage, la seule différence résultant dans le positionnement du pain. Cette solution, sans modification de la puissance, est avantageuse car elle ne nécessite pas de commande spéciale pour la fonction réchauffage, ni de circuit électrique d'alimentation des éléments chauffants différent. Selon cette réalisation, il convient de limiter au maximum l'échauffement du boîtier, notamment par un jeu L périphérique d'au moins un millimètre entre la tôle et le boîtier.

Selon une variante de réalisation de l'invention, il peut être prévu de diminuer la puissance, lorsque l'utilisateur désire réchauffer des petits pains. A cet effet, plusieurs solutions techniques sont possibles, par exemple un pont diviseur de tension permettant d'abaisser la tension d'alimentation des éléments chauffants, ou un cyclage alternant des périodes d'alimentation et d'arrêt des éléments chauffants.

Selon cette réalisation, il est nécessaire de disposer d'un bouton sélecteur permettant d'activer cette fonction de diminution de la puissance. Ceci peut être réalisé à l'aide du bouton de réglage de la temporisation, diminuant ainsi les interfaces avec l'utilisateur.

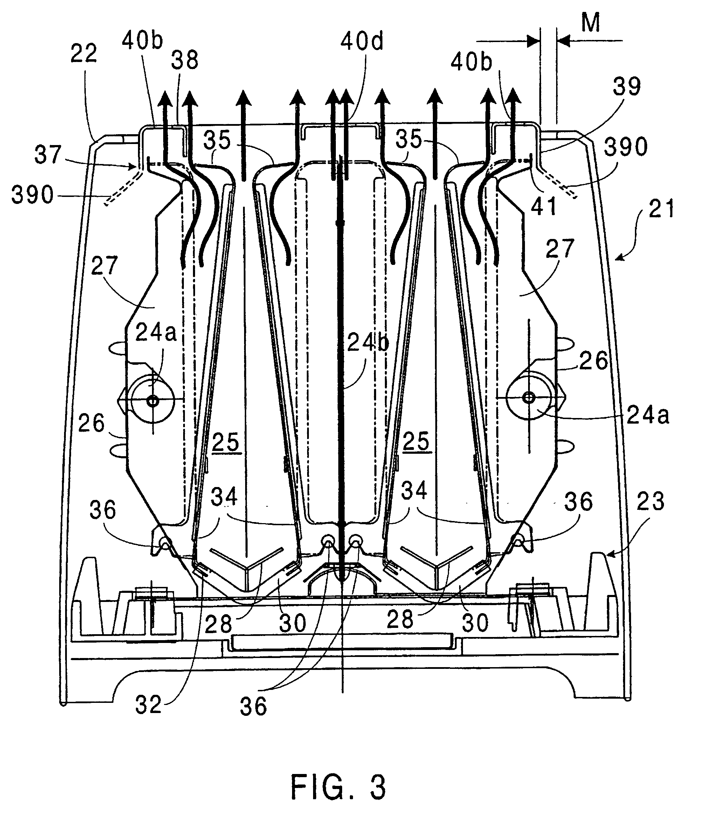

Les figures 3 et 4 montrent la présente invention sur un grille-pain 21 possédant deux chambres de chauffe 25 dans un boîtier 22 ouvert dans sa partie supérieure. Un bâti 23 comporte des réflecteurs latéraux 26 et des parois transversales 27, ces dernières présentant des encoches supportant des éléments chauffant 24a. Un élément chauffant 24b est localisé au centre du grille-pain. A titre d'exemple, l'élément 24b est une plaque supportant un fil résistif chauffant, alors que les éléments 24a sont des barreaux de type quartz, tout autre élément chauffant pouvant être utilisé dans le cadre de la présente invention.

Les chambres de chauffe 25 sont délimitées notamment par des grilles 34 pouvant pivoter autour de points 36 et dont l'extrémité située dans la partie basse du grille-pain présente une courbure 32 orientée vers l'intérieur de la chambre de grillage, en liaison avec une lame ressort 30 pouvant être actionnée par le chariot porte pain 28. D'autres systèmes de pivotement des grilles peuvent être utilisés sans sortir du cadre de la présente invention.

Comme pour le grille-pain à une seule chambre de chauffe, l'extrémité des grilles 34 située dans la partie haute du grille-pain présente un rebord 35 orienté vers l'extérieur de la chambre de façon à dévier le flux d'air chaud ascendant généré par les éléments chauffants 24a, 24b.

Par ailleurs, une tôle 37, liée au bâti 23 ou au boîtier 22 par des entretoises isolantes, entoure les chambres de chauffe 25 au niveau de l'ouverture ménagée dans le boîtier. Cette tôle est surélevée par rapport au boîtier et présente un rebord 38 possédant des ouvertures 40a, 40b, 40c, 40d réparties sur la périphérie de la tôle. Selon l'exemple proposé, les côtés transversaux sont dépourvus d'ouvertures, mais ces côtés peuvent en être pourvus, comme sur la figure 5, le choix dépendant de nombreux facteurs liés à l'échauffement du rebord 38.

Ce dernier possède une paroi verticale extérieure 39. Comme dans l'exemple précédent, la forme, la taille et la répartition des trous sont conçues afin de répartir au mieux le flux de chaleur provenant des éléments chauffants, pour assurer un bon réchauffement, comme illustré figure 3.

Selon l'exemple proposé, le rebord 38 est plat, mais il peut être muni de bossages, comme précédemment expliqué, pour surélever le pain ou pour délimiter des zones de réchauffage.

Afin de limiter les ponts thermiques vers le boîtier, un espace M est ménagé entre la tôle 37 et le boîtier 22. Par ailleurs, les réflecteurs 26 possèdent une extension 41 recouvrant la paroi verticale 39 de la tôle 37 afin de constituer une double barrière de protection du boîtier 22.

Les réflecteurs présentent, avantageusement, un étranglement dans leur partie supérieure, comme précédemment expliqué.

Avantageusement, la tôle 37 peut posséder une collerette 390, illustrée en pointillés figure 3, et inclinée d'un angle α, présentant des caractéristiques et des effets similaires à la collerette 191 précédemment décrite.

Dans une variante de réalisation, la collerette est perforée, afin d'équilibrer les échanges de chaleur de la collerette vers, d'une part la paroi latérale 201 du boîtier 2, et d'autre part vers le rebord 200 dudit boîtier.

Le fonctionnement est identique à celui présenté figure 1 et 2. L'alimentation électrique des éléments chauffants peut être identique, dans son fonctionnement, à celle des grille-pain à une seule ouverture comme un exemple est présenté aux figures 1 et 2.

A titre de variante les éléments chauffants 24a en série peuvent être couplés en parallèle à l'élément chauffant central 24b, de sorte que le réchauffage entraîne uniquement l'alimentation électrique de l'élément chauffant central. Cette disposition doit être relayée par une position spéciale du bouton de réglage de l'indice de grillage, par exemple, afin que l'utilisateur puisse sélectionner ce mode de fonctionnement particulier du grille-pain.

La figure 5 présente une autre variante de réalisation du dispositif de réchauffage. A cet effet, une tôle 47 est déformée afin de présenter un rebord 48, une paroi verticale 49 ainsi qu'une collerette 490. Une ouverture centrale 51 est ménagée, correspondant sensiblement à l'ouverture de la chambre de chauffe du grille-pain. Le rebord 48 est également muni d'ouvertures 50a, 50b, 50c ainsi que de bossages 52, délimitant, sur l'exemple proposé, 3 zones de réchauffage facilement identifiables par l'utilisateur, d'autant plus que les ouvertures 50a, 50b, 50c sont réalisées dans ces zones.

Ces bossages 52 permettent donc, non seulement de bien maintenir et supporter le pain dans les parties creuses ainsi délimitées, mais permet également à l'utilisateur de repérer et d'identifier visuellement la fonction de réchauffage du pain.

La présente invention ne saurait être limitée à un toit se présentant sous la forme d'une tôle telle qu'illustrée dans l'exemple proposé. Il est envisageable d'utiliser d'autres matériaux, tels le plastique, les céramiques, les verres, ... sans sortir du cadre de la présente invention, dès l'instant où ces matériaux présentent des caractéristiques thermomécaniques compatibles avec les températures développées à la sortie des chambres de chauffe lors de la cuisson du pain.

## Revendications

1. Grille-pain (1, 21) comportant un bâti (3, 23) agencé dans un boîtier (2, 22), au moins une chambre de grillage (5, 25) verticale ouverte dans la partie supérieure du boîtier (2, 22), un toit (17, 37, 47) périphérique à l'ouverture de la chambre de grillage (5, 25) et solidaire du grille-pain (1, 21), possédant un rebord supérieur (18, 38, 48) muni d'ouvertures (20, 40a, 40b, 40c, 40d, 50a, 50b, 50c), des moyens de chauffe (4, 24a, 24b) situés à proximité de la chambre de grillage (5, 25), **caractérisé en ce qu'**au moins une partie du rebord du toit (17, 37, 47) est surélevée par rapport à la partie supérieure du boîtier (2, 22).

2. Grille-pain selon la revendication 1, **caractérisé en ce que** le rebord supérieur (18, 38, 48) du toit (17, 37, 47) possède des bossages (52), de telle sorte à présenter des points d'appui à différentes hauteurs.

3. Grille-pain selon la revendication précédente, **caractérisé en ce que** les ouvertures (20, 40a, 40b, 40c, 40d, 50a, 50b, 50c) dans le rebord (18, 38, 48) du toit (17, 37, 47) sont localisées au niveau des zones de positionnement du pain.

4. Grille-pain selon l'une des revendications précédentes, **caractérisé en ce que** le rebord (18, 38, 48) du toit présente une déclivité vers l'ouverture de la chambre de chauffe (5, 25).

5. Grille-pain selon l'une des revendications précédentes, **caractérisé en ce qu'**un espace (L, M) périphérique est ménagé entre le toit (17, 37, 47) et le boîtier (2, 22).

6. Grille-pain selon l'une des revendications précédentes, **caractérisé en ce que** le toit (17, 37, 47) est solidaire du bâti (3, 23) du grille-pain.

7. Grille-pain selon l'une des revendications 1 à 5, **caractérisé en ce que** le toit (17, 37, 47) est relié au boîtier (2, 22) par l'intermédiaire d'entretoises isolantes.

8. Grille-pain selon l'une des revendications précédentes, **caractérisé en ce que** le rebord (18, 38, 48) du toit (17, 37, 47) présente, à sa base, une collerette extérieure (390, 490, 191) inclinée d'un angle α par rapport à l'horizontal au moins égal à 30°.

9. Grille-pain selon l'une des revendications précédentes, **caractérisé en ce que** la chambre de grillage (5, 25) est délimitée par deux grilles de serrage (14, 34) sensiblement verticales et susceptibles de se rapprocher l'une vers l'autre lorsque les éléments chauffants (4, 24a, 24b) sont alimentés, lesdites grilles de serrage (14, 34) comportant un rebord supérieur (15, 35) sensiblement perpendiculaire aux dites grilles et orienté vers l'extérieur de la chambre (5, 25), de manière à fermer partiellement la chambre de chauffe, lorsqu'elles sont rapprochées l'une de l'autre, pour ainsi détourner le flux d'air chaud ascendant généré par les éléments chauffants (4, 24a, 24b).

10. Grille-pain selon l'une des revendications précédentes, **caractérisé en ce que** des réflecteurs (6, 26) sont associés aux éléments chauffants, lesdits réflecteurs présentant, vers leur extrémité supérieure, un étranglement (62) par l'intermédiaire de deux pentes (63, 64) convergentes.

11. Grille-pain selon l'une des revendications précédentes, **caractérisé en ce qu'**il est constitué de deux chambres de chauffe (25) verticales, de deux éléments chauffants latéraux (24a) situés chacun entre une chambre de chauffe (25) et le boîtier (22) du grille-pain, ces deux éléments (24a) étant montés électriquement en série, ainsi que d'un élément chauffant central (24b) situé entre les deux chambres de chauffe (25), et monté en parallèle sur les deux éléments chauffants latéraux (24a), un interrupteur permettant de déconnecter les deux éléments chauffants latéraux (24a) afin de n'alimenter que l'élément chauffant central (24b).

## Claims

1. A toaster (1, 2) comprising a structure (3, 23) arranged in a housing (2, 22), at least one vertical toasting chamber (5, 25) open in the top portion of the housing (2, 22), a peripheral top piece (17, 37, 47) at the opening of the toasting chamber (5, 25), secured to the toaster (1, 21), and possessing a top rim (18, 38, 48) provided with openings (20, 40a, 40b, 40c, 40d, 50a, 50b, 50c), and heater means (4, 24a, 24b) situated close to the toasting chamber (5, 25), the toaster being **characterized in that** at least a portion of the rim of the top piece (17, 37, 47) is raised higher than the top portion of the housing (2, 22).

2. A toaster according to claim 1, **characterized in that** the top rim (18, 38, 48) of the top piece (17, 37, 47) possesses projections (52) so as to present support points at different heights.

3. A toaster according to the preceding claim, **characterized in that** the openings (20, 40a, 40b, 40c, 40d, 50a, 50b, 50c) in the rim (18, 38, 48) of the top piece (17, 37, 47) are located in bread-positioning zones.

4. A toaster according to any preceding claim, **characterized in that** the rim (18, 38, 48) of the top piece slopes towards the opening of the heating chamber (5, 25).

5. A toaster according to any preceding claim, **characterized in that** a peripheral space (L, M) is provided between the top piece (17, 37, 47) and the housing (2, 22).

6. A toaster according to any preceding claim, **characterized in that** the top piece (17, 37, 47) is secured to the structure (3, 23) of the toaster.

7. A toaster according to any one of claims 1 to 5, **characterized in that** the top piece (17, 37, 47) is connected to the housing (2, 22) by means of insulating spacers.

8. A toaster according to any preceding claim, **characterized in that** the rim (18, 38, 48) of the top piece (17, 37, 47) presents an outwardly-directed collar (390, 490, 191) at its base, the collar sloping relative to the horizontal at an angle α of not less than 30°.

9. A toaster according to any preceding claim, **characterized in that** the toasting chamber (5, 25) is defined by two substantially vertical clamping grids (14, 34) capable of moving towards each other when the heater elements (4, 24a, 24b) are powered, said clamping grids (14, 34) having respective top rims (15, 35) substantially perpendicular to said grids and directed towards the outside of the chamber (5, 25) so as to close off the heating chamber in part when the grids are moved towards each other, thereby deflecting the flow of rising hot air generated by the heater elements (4, 24a, 24b).

10. A toaster according to any preceding claim, **characterized in that** reflectors (6, 26) are associated with the heater elements, said reflectors possessing, towards their top ends, respective constrictions (62) implemented by means of pairs of converging slopes (63, 64).

11. A toaster according to any preceding claim, **characterized in that** it has two vertical heating chambers (25), two outer heater elements (24a) each situated between a respective heating chamber (25) and the housing (22) of the toaster, these two elements (24a) being connected electrically in series, and a central heater element (24b) situated between the two heating chambers (25) and connected in parallel with the two outer heater elements (24a), a switch enabling the two outer heater elements (24a) to be disconnected so as to power the central heater element (24b) only.

## Patentansprüche

1. Toaster (1, 21) mit einem Gestell (3, 23), das in einem Gehäuse (2, 22) angeordnet ist, mindestens einer vertikalen, im oberen Teil des Gehäuses (2, 22) offenen Röstkammer (5, 25), einem Umfangsverdeck (17, 37, 47) an der Öffnung der Röstkammer (5, 25), das mit dem Toaster (1, 21) fest verbunden ist und einen oberen Rand (18, 38, 48) besitzt, der mit Öffnungen (20, 40a, 40b, 40c, 40d, 50a, 50b, 50c) versehen ist, Heizmitteln (4, 24a, 24b), die sich in der Nähe der Röstkammer (5, 25) befinden, **dadurch gekennzeichnet, daß** zumindest ein Teil des Randes des Verdecks (17, 37, 47) bezüglich des oberen Teils des Gehäuses (2, 22) überhöht ist.

2. Toaster nach Anspruch 1, **dadurch gekennzeichnet, daß** der obere Rand (18, 38, 48) des Verdecks (17, 37, 47) Höcker (52) besitzt, so daß er Abstützpunkte in verschiedenen Höhen aufweist.

3. Toaster nach dem vorangehenden Anspruch, **dadurch gekennzeichnet, daß** die Öffnungen (20, 40a, 40b, 40c, 40d, 50a, 50b, 50c) im Rand (18, 38, 48) des Verdecks (17, 37, 47) auf der Höhe der Positionierungszonen des Brots lokalisiert sind.

4. Toaster nach einem der vorangehenden Ansprüche, **dadurch gekennzeichnet, daß** der Rand (18, 38, 48) des Verdecks eine Abschrägung zur Öffnung der Heizkammer (5, 25) aufweist.

5. Toaster nach einem der vorangehenden Ansprüche, **dadurch gekennzeichnet, daß** ein Umfangsraum (L, M) zwischen dem Verdeck (17, 37, 47) und dem Gehäuse (2, 22) ausgebildet ist.

6. Toaster nach einem der vorangehenden Ansprüche, **dadurch gekennzeichnet, daß** das Verdeck (17, 37, 47) mit dem Gestell (3, 23) des Toasters fest verbunden ist.

7. Toaster nach einem der Ansprüche 1 bis 5, **dadurch gekennzeichnet, daß** das Verdeck (17, 37, 47) mit dem Gehäuse (2, 22) durch isolierende Querstreben verbunden ist.

8. Toaster nach einem der vorangehenden Ansprüche, **dadurch gekennzeichnet, daß** der Rand (18, 38, 48) des Verdecks (17, 37, 47) an seiner Basis einen äußeren Kragen (390, 490, 191) aufweist, der in einem Winkel α von mindestens gleich 30° bezüglich der Horizontalen geneigt ist.

9. Toaster nach einem der vorangehenden Ansprüche, **dadurch gekennzeichnet, daß** die Röstkammer (5, 25) durch zwei im wesentlichen vertikale Klemmroste (14, 34) begrenzt ist, die sich aneinander annähern können, wenn die Heizelemente (4, 24a, 24b) gespeist werden, wobei die Klemmroste (14, 34) einen oberen Rand (15, 35) aufweisen, der zu den Rosten im wesentlichen senkrecht ist und zum Äußeren der Kammer (5, 25) orientiert ist, um die Heizkammer teilweise zu schließen, wenn sie aneinander angenähert sind, um somit den aufwärts strömenden Heißluftstrom, der von den Heizelementen (4, 24a, 24b) erzeugt wird, umzuleiten.

10. Toaster nach einem der vorangehenden Ansprüche, **dadurch gekennzeichnet, daß** Reflektoren (6, 26) mit den Heizelementen verbunden sind, wobei die Reflektoren zu ihrem oberen Ende hin eine Einschnürung (62) durch zwei zusammenlaufende Schrägen (63, 64) aufweisen.

11. Toaster nach einem der vorangehenden Ansprüche, **dadurch gekennzeichnet, daß** er aus zwei vertikalen Heizkammern (25), zwei seitlichen Heizelementen (24a), die jeweils zwischen einer Heizkammer (25) und dem Gehäuse (22) des Toasters liegen, wobei diese zwei Elemente (24a) elektrisch in Reihe geschaltet sind, sowie einem mittleren Heizelement (24b), das zwischen den zwei Heizkammern (25) liegt und mit den zwei seitlichen Heizelementen (24a) parallel geschaltet ist, besteht, wobei ein Schalter es ermöglicht, die zwei seitlichen Heizelemente (24a) abzuschalten, um nur das mittlere Heizelement (24b) zu speisen.
